# FASCICULE DE BREVET EUROPEEN

(11) **EP 0 595 708 B1**
(45) Date de publication et mention de la délivrance du brevet: **21.08.1996**
(21) Numéro de dépôt: 93402622.0
(22) Date de dépôt: 26.10.1993
(51) Int. Cl.: H02G 15/103, H02G 15/06

(54) **Dispositif anti-retrait d'isolation, pour câble de puissance à isolation synthétique**
Vorrichtung zum Verhindern des Schwindens der Isolation für kunststoffisolierte Energiekabel
Device avoiding insulation shrinkage for power cables with synthetic insulation

(30) Priorité: 29.10.1992 FR 9212959
(43) Date de publication de la demande: 04.05.1994
(73) Titulaire: ALCATEL CABLE, F-92100 Clichy (FR)
(72) Inventeur: Darcy, André, F-62100 Calais (FR)
(74) Mandataire: Pothet, Jean Rémy Emile Ludovic

(56) Documents cités:
- WO-A-86/02210
- FR-A- 2 311 436
- US-A- 4 006 288

## Description

La présente invention concerne les câbles de puissance, moyenne, haute ou très haute tension, à conducteur recouvert d'une isolation synthétique. Elle porte plus particulièrement sur un dispositif anti-retrait d'isolation, pour un tel câble de puissance.

Un tel dispositif anti-retrait d'isolation est destiné à équiper les extrémités dénudées de manière étagée et dites préparées de tels câbles de puissance.

Le document EP-A-0199742 décrit une jonction de deux câbles tels que précités dont les extrémités à raccorder sont préalablement préparées. Dans cette jonction, les conducteurs des deux câbles sont mécaniquement interconnectés bout-à-bout et sont entourés d'un adaptateur métallique fixé sur les parties terminales des isolations des deux câbles. L'adaptateur est cylindrique et formé en deux parties semi-cylindriques joignables l'une à l'autre. Un manchon monolithique recouvre et enserre l'adaptateur ainsi que les portions des câbles de part et d'autre de cet adaptateur.

Cet adaptateur est conçu pour présenter deux parois intérieures annulaires, non terminales, que traversent les deux conducteurs dénudés des deux câbles et qui forment deux butées pour les faces frontales des isolations de l'un et l'autre des deux câbles. Ses extrémités recouvrent les parties terminales des isolations, rendues préalablement de diamètre extérieur légèrement réduit, pour l'alignement des surfaces extérieures des isolations et de l'adaptateur. Elles sont ancrées dans leurs parties terminales, par engagement d'une nervure annulaire intérieure prévue sur chaque extrémité de l'adaptateur dans une gorge correspondante prévue sur la partie terminale de l'isolation de chaque câble.

Dans cette jonction, l'adaptateur précité assure, en plus de sa fonction normale d'adaptation au diamètre des isolations, celle supplémentaire de blocage des isolations l'une par rapport à l'autre. Il impose donc que le dimensionnement de l'extrémité préparée de chaque câble ait été défini et réalisé avec précision, en fonction des dimensions de cet adaptateur et en tenant compte du mode de raccordement des conducteurs, pour la mise en place convenable de l'adaptateur après que les conducteurs aient été raccordés. Il rend délicate l'opération de raccordement des conducteurs, au cours de laquelle les manipulations des extrémités préparées et les efforts exercés sur les conducteurs peuvent entrainer un retrait plus ou moins sensible des isolations et alors donner lieu à des problèmes ou à une impossibilité de mise en place correcte de l'adapteur.

En outre, un tel adaptateur n'est pas utilisable dans une terminaison de câble et ne peut donc pas y remplir la fonction supplémentaire qu'il assure dans la jonction selon cet art connu.

La présente invention a pour but d'éviter les inconvénients de cette solution connue, en réalisant le blocage d'isolation d'un tel câble directement sur une extrémité préparée de celui-ci et laissant libre de tout réglage dimensionnel particulier ladite extrémité préparée relativement à un équipement qu'elle doit recevoir.

Elle a donc pour objet un dispositif anti-retrait d'isolation, pour câble de puissance à isolation synthétique recouvrant un conducteur à l'exception d'une extrémité préparée dudit câble, destinée à recevoir un équipement de raccordement, où l'isolation dénudée est en retrait sur le conducteur également dénudé, comportant un élément de butée contre la face frontale de ladite isolation et un élément de fixation sur la périphérie de la partie terminale de ladite isolation, caractérisé en ce qu'il est constitué par une bague épaulée, comportant deux épaulements annulaires définissant, l'un, ledit élément de butée et, l'autre, ledit élément de fixation, montée directement en place sur ledit conducteur dénudé et la partie terminale de l'isolation de ladite extrémité préparée dudit câble et solidarisée audit conducteur dénudé par des moyens de retenue intégrés à ladite bague.

Ce dispositif présente en outre au moins l'une des caractéristiques additionnelles suivantes:
- ladite bague est en deux demi-coquilles,
- lesdits épaulements sont terminaux sur la bague,
- les moyens de retenue sont intégrés dans l'épaulement, dit avant, de butée et constitués par des vis encastrées dans des trous traversant de part et d'autre la bague, au niveau dudit épaulement avant,
- ledit épaulement avant présente une nervure saillante intérieurement dans la bague, et reçue dans une gorge correspondante d'un accessoire appartenant audit équipement de raccordement,
- lesdits moyens de retenue sont constitués par une section cylindrique dite avant de ladite bague, ayant un diamètre intérieur sensiblement égal à celui du conducteur dénudé.

Les caractéristiques et avantages de la présente invention ressortiront de la description ci-après d'exemples de réalisation illustrés dans les dessins ci-annexés. Dans ces dessins:
- la figure 1 est une vue schématique en élévation et coupe partielle d'une jonction de deux câbles équipés chacun d'un dispositif anti-retrait d'isolation selon la présente invention,
- la figure 2 est une vue en coupe partielle à échelle agrandie de l'un des dispositifs anti-retrait d'isolation de la figure 1,
- la figure 3 est une vue schématique partielle en coupe axiale et élévation d'une terminaison de câble, dans laquelle le câble est également équipé d'un dispositif anti-retrait d'isolation selon l'invention,
- la figure 4 est une vue schématique, partiellement en élévation et en coupe, d'une variante de réalisation du dispositif anti-retrait d'isolation monté sur un câble.

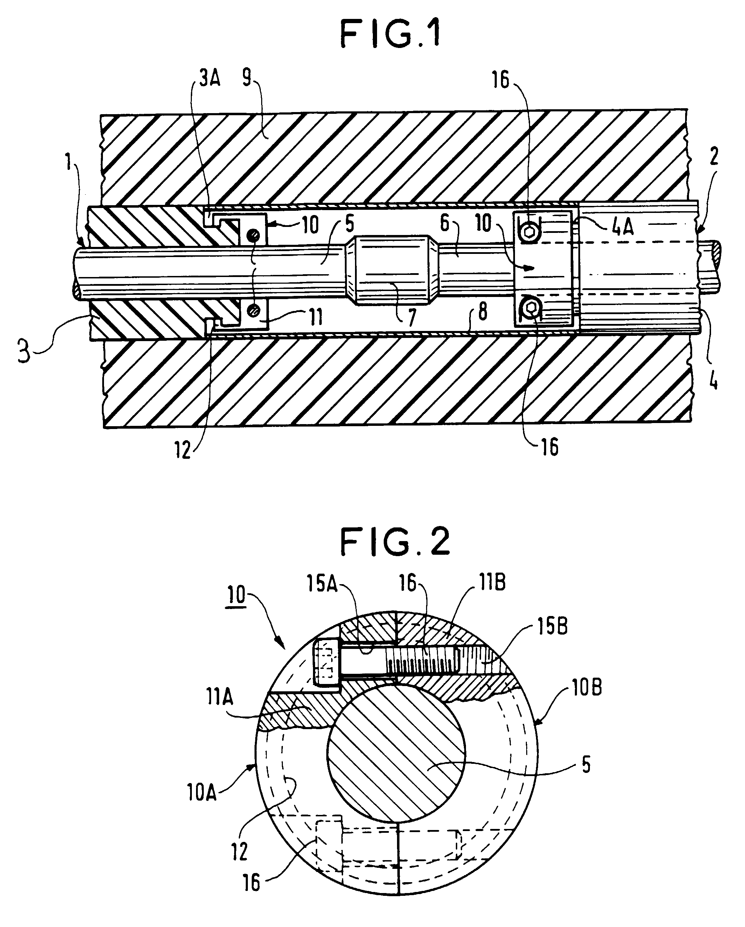

La jonction illustrée dans la figure 1 est de type connu. Elle assure le raccordement de deux câbles de puissance 1 et 2 à isolant synthétique 3, 4 recouvrant leur conducteur central massif ou multibrins 5, 6. Chacun de ces câbles comporte, en outre, de manière connue et non représentée un écran semi-conducteur entourant leur isolation, une gaine de protection extérieure, et un écran métallique directement sous la gaine de protection et pouvant lui être fixée. Les extrémités des câbles ainsi raccordées ont été préalablement dénudées de manière étagée et sont dites préparées. Elles sont en outre équipées dès leur préparation d'un dispositif anti-retrait d'isolation 10, monté sur chacune d'elles avant la réalisation de la jonction.

Cette jonction comporte une connexion mécanique 7 des conducteurs 5, 6, qui est réalisée par exemple par soudure bout-à-bout ou au moyen d'un raccord électrique, une enveloppe conductrice 8, qui entoure la connexion 7 et la partie terminale de diamètre préalablement réduit de l'une et l'autre des isolations 3 et 4, ainsi que le dispositif anti-retrait d'isolation 10 déjà monté sur chaque extrémité préparée, et un manchon élastique de protection 9 qui recouvre à serrage l'enveloppe 8 et les portions de part et d'autre des isolations.

Ce manchon 9 est, de manière bien connue et non représentée, à couche semi-conductrice intérieure en contact avec l'enveloppe 8, le long de celle-ci, et à couche semi-conductrice extérieure, sur sa longueur, dont les extrémités recouvrent les extrémités des écrans semi-conducteurs dénudés des deux câbles. L'enveloppe conductrice 8, par exemple en aluminium, est de même diamètre extérieur que les isolations pour l'alignement de leurs surfaces extérieures.

Le dispositif anti-retrait d'isolation 10, monté sur l'extrémité préparée de chacun des deux câbles 1 et 2 est constitué par une bague épaulée, fixée sur la partie terminale de l'isolation et sur le conducteur du câble qui la reçoit.

Cette bague présente deux épaulements annulaires 11 et 12, qui dans cette réalisation sont prévus sur l'une et l'autre de ses deux extrémités, respectivement.

L'épaulement 11, situé du côté de la connexion et dit avant, est relativement épais, et définit un alésage au diamètre du conducteur du câble. L'autre épaulement 12, dit arrière, définit un alésage de diamètre inférieur à celui déjà réduit de la partie terminale de l'isolation du câble. Il lui correspond une gorge 3A ou 4A sur la périphérie de la partie terminale de chacune des isolations 3 et 4, dans laquelle il s'engage et est retenu, alors que l'épaulement avant 11 vient en butée contre la face frontale de l'isolation et est ainsi fixé sur le conducteur du câble.

Cette bague épaulée, mise en place et bloquée sur la partie terminale de l'isolation, coiffe la seule partie terminale de l'isolation mais a sa périphérie restant en léger retrait sur la périphérie de l'isolation non ainsi coiffée.

Ainsi que montré clairement dans la figure 2 cette bague 10 est formée de deux demi-coquilles semi-cylindriques 10A, 10B, joignables l'une à l'autre autour du conducteur et de la partie terminale de l'isolation du câble.

Ces deux demi-coquilles sont en outre serrées l'une à l'autre pour leur maintien et surtout pour leur fixation mécanique au conducteur du câble. Deux trous 15A ou 15B parallèles et transversaux à l'axe de la bague sont prévus à cet effet dans l'épaulement semi-annulaire avant 11A ou 11B de chacune d'elles. Les deux paires de trous 15A-15B traversent de part en part la bague et sont situées de part et d'autre de l'alésage de l'épaulement avant. Deux vis 16 engagées dans ces deux paires de trous assurent le serrage des deux demi-coquilles l'une à l'autre et sur le conducteur. Elles sont rendues intégrées dans la bague résultante, en étant chacune entièrement logée dans la paire de trous qui la reçoit, l'un des trous, tel que 15A, étant lisse et à extrémité élargie du côté de la périphérie pour l'encastrement de la tête de vis et l'autre 15B étant taraudé pour l'ancrage du filetage de la vis.

En regard de cette figure 1, on voit que les deux dispositifs anti-retrait d'isolation 10 équipant les extrémités préparées de ces deux câbles sont d'encombrement négligeable et se trouvent intégrés dans la jonction bien qu'étant montés avant et indépendamment de celle-ci. Ils n'exigent aucun dimensionnement particulier des deux extrémités préparées, pour leur montage et pour le montage ultérieur de la jonction.

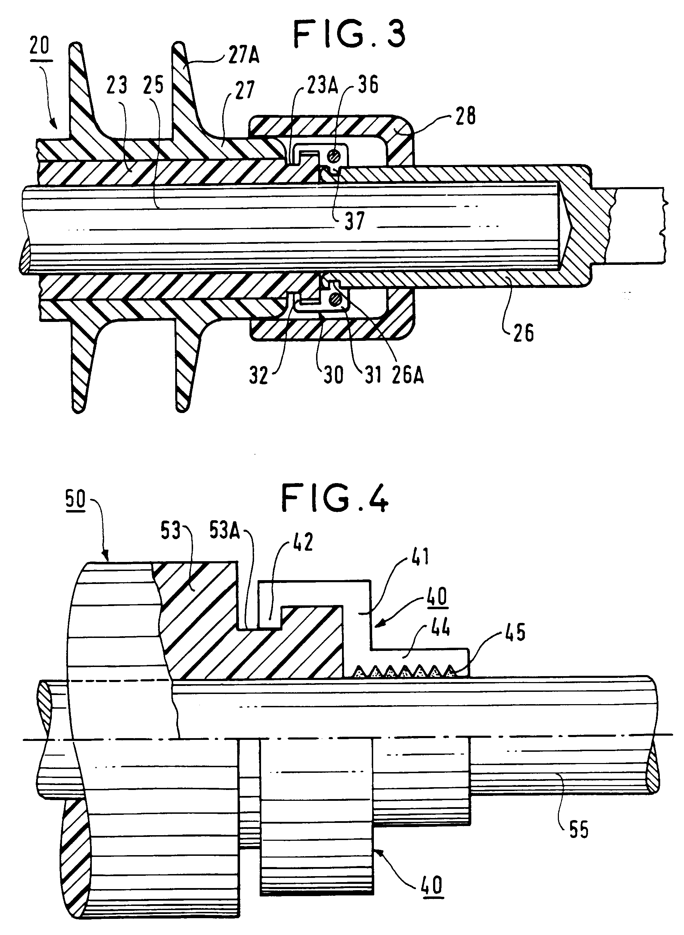

La figure 3 illustre un équipement d'extrémité de câble ou terminaison de câble qui est en tant que tel également connu et monté sur l'extrémité préparée d'un câble 20. Ce câble 20 est analogue aux câbles raccordés par la jonction de la figure 1. Son isolant synthétique 23 est pareillement dénudé sur son extrémité préparée et en retrait sur son conducteur 25 également dénudé.

Cette terminaison de câble comporte un embout terminal de raccordement 26, qui est partiellement enfilé sur le conducteur 25 et est solidarisé sur celui-ci, par exemple par sertissage, poinçonnage ou autre mode de fixation, un manchon rétractable isolant de protection 27, qui est dans cet exemple à jupes ou ailettes périphériques 27A et enserre l'isolation dénudée 23 de l'extrémité préparée du câble, et un capuchon isolant 28, qui est enfilé et enserre l'embout de raccordement 26, le traversant, et est solidarisé sur l'extrémité du manchon 27, par exemple par collage.

Le câble équipé de cette terminaison est également équipé d'un dispositif anti-retrait d'isolation, noté 30. Ce dispositif 30 est quasi-analogue aux dispositifs 10 de la figure 1. Il présente comme ces derniers un épaulement avant 31, de butée en bout de l'isolant 23, et un épaulement arrière 32, de retenue dans une gorge périphérique 23A de la partie terminale de l'isolation 23. Il est, pareillement aux précités, formé en deux demi-coquilles serrées l'une à l'autre par des vis 36 et ainsi solidarisé relativement au conducteur 25.

La différence que présente ce dispositif 30, par rapport aux dispositifs 10 précités, consiste en la présence d'une nervure annulaire et médiane 37, prévue sur l'épaulement avant 31 et saillante dans l'alésage défini par cet épaulement avant. Cet alésage est en outre de diamètre laissé légèrement supérieur à celui du conducteur 25. La nervure 37 est reçue dans une gorge 26A prévue en correspondance sur la périphérie de l'embout de raccordement 26. Elle s'y bloque à serrage dans cette gorge pour sa fixation sur l'embout de raccordement, lui-même fixé au conducteur.

Bien entendu, ce dispositif 30 peut en variante être identique aux dispositifs 10 précités et dans ces conditions venir se fixer directement sur le conducteur dénudé, l'embout de raccordement ne recouvrant alors pas totalement ce conducteur dénudé.

La figure 4 montre une autre variante de réalisation du dispositif anti-retrait d'isolation, alors désigné sous la référence 40. Ce dispositif 40, pareillement aux dispositifs analogues précédents, est monté et retenu sur l'extrémité préparée d'un câble 50, à isolant synthétique 53 et conducteur 55, qui doit recevoir un quelconque équipement de raccordement, tel qu'une jonction à un autre câble ou une terminaison de câble. Il est formé d'une bague qui présente un épaulement 41, non plus avant mais intermédiaire, de butée en bout de l'isolation et un épaulement arrière 42, de retenue dans une gorge périphérique 53A de l'isolation 53. Elle présente en outre une section cylindrique dite avant 44, de diamètre intérieur sensiblement égal ou très légèrement supérieur à celui extérieur du conducteur qu'elle recouvre et auquel elle est solidarisée.

Cette bague 50 est également en deux demi-coquilles et est d'épaisseur quasi-uniforme sur sa longueur. Ses deux demi-coquilles sont jointes l'une à l'autre et solidarisées au conducteur 55 en particulier, par collage, vissage, sertissage, poinçonnage, soudure, brasure, ou tout autre moyen convenable, schématisé en 45 entre cette section avant 44 et ledit conducteur. Cette section avant a son alésage éventuellement taraudé ou strié comme illustré pour cette fixation ou une meilleure fixation, selon le moyen de fixation utilisé.

On note en particulier qu'une telle bague 50 peut être sertie en même temps que l'embout de raccordement monté sur le conducteur du câble, lorsque ce câble est équipé d'une terminaison de câble (figure 3).

Dans les réalisations décrites ci-avant, le dispositif anti-retrait d'isolation est métallique et en particulier en aluminium ou en matière plastique résistant en température. Il permet un nombre important de montages et démontages sans détérioration, ceci étant particulièrement appréciable dans les jonctions de câbles, notamment lors d'essais de routine sur les jonctions.

Ce dispositif a en outre l'avantage d'être utilisable aussi bien dans les terminaisons de câble que dans les jonctions, ce qui n'est pas le cas du dispositif de l'art antérieur.

## Revendications

1. Dispositif anti-retrait d'isolation, pour câble de puissance (1, 2, 20, 50) à isolation synthétique (3, 4, 23, 53) recouvrant un conducteur (5, 6, 25, 55) à l'exception d'une extrémité préparée dudit câble, destinée à recevoir un équipement de raccordement, où l'isolation dénudée est en retrait sur le conducteur également dénudé, comportant un élément de butée (11, 31, 41) contre la face frontale de ladite isolation et un élément de fixation (12, 32, 42) sur la périphérie de la partie terminale de ladite isolation, caractérisé en ce qu'il est constitué par une bague épaulée (10, 30, 40), comportant deux épaulements annulaires (11-12, 31-32, 41-42) définissant, l'un, ledit élément de butée et, l'autre, ledit élément de fixation, montée directement en place sur ledit conducteur dénudé et la partie terminale de l'isolation de ladite extrémité préparée dudit câble et solidarisée audit conducteur dénudé par des moyens de retenue (16, 36, 44) intégrés à ladite bague.

2. Dispositif selon la revendication 1, caractérisé en ce que ladite bague (10, 30) est en deux demi-coquilles joignables l'une à l'autre, en ce que lesdits épaulements (11-12, 31-32) sont terminaux sur ladite bague et dits épaulement avant pour celui de butée et épaulement arrière pour celui de fixation et en ce que lesdits moyens de retenue (16, 36) sont intégrés dans ledit épaulement avant pour l'assemblage à serrage desdites demi-coquilles sur ledit conducteur dénudé.

3. Dispositif selon la revendication 2, caractérisé en ce que lesdits moyens de retenue sont constitués par des vis (16, 36) encastrées dans des paires de trous (15A, 15B) prévus dans l'une et l'autre desdites demi-coquilles, chaque paire de trous traversant de part en part ladite bague, au niveau dudit épaulement avant, lui-même prévu pour enserrer à pression ledit conducteur.

4. Dispositif selon la revendication 3 et pour lequel ledit équipement de raccordement à monter sur ladite extrémité préparée dudit câble est un équipement de terminaison à embout de raccordement bloqué sur ledit conducteur dénudé, caractérisé en ce que ledit épaulement avant (31) présente une nervure annulaire (37), saillante intérieurement dans ladite bague (30), assurant la retenue de ladite bague dans une gorge correspondante (26A) prévue sur périphérie dudit embout (26).

5. Dispositif selon la revendication 1, caractérisé en ce que ladite bague (40) est en deux demi-coquilles joignables l'une à l'autre, en ce que l'épaulement de fixation (42) est terminal et dit arrière sur ladite bague et l'épaulement de butée (41) est intermédiaire sur ladite bague, et en ce que lesdits moyens de retenue (44) sont définis par une section dite avant de ladite bague, ladite section avant ayant un diamètre intérieur sensiblement égal à celui dudit conducteur et lui étant solidarisée.

## Patentansprüche

1. Vorrichtung zum Schutz gegen ein Zurückweichen der Isolierung eines Leistungskabels (1, 2, 20, 50) mit Kunststoffisolierung (3, 4, 23, 53), die einen Leiter (5, 6, 25, 55) mit Ausnahme eines vorbereiteten Endes des Kabels umgibt, wobei dieses Ende eine Anschlußeinrichtung aufnehmen soll, wobei die freigelegte Isolierung auf dem ebenfalls freigelegten Leiter zurückgesetzt ist und wobei die Vorrichtung ein Anschlagelement (11, 31, 41), das an der Stirnseite der Isolierung anliegt, und ein Befestigungselement (12, 32, 42) aufweist, das an der Peripherie des Endbereichs der Isolierung befestigt ist, dadurch gekennzeichnet, daß die Vorrichtung von einem Ring (10, 30, 40) mit zwei ringförmigen Schultern (11-12, 31-32, 41-42) gebildet wird, wobei eine Schulter das Anschlagelement und die andere das Befestigungselement bildet und der Ring direkt auf dem freigelegten Leiter und dem Endbereich der Isolierung des vorbereiteten Kabelendes montiert und auf dem freigelegten Leiter durch in den Ring integrierte Haltemittel (16, 36, 44) befestigt ist.

2. Vorrichtung nach Anspruch 1, dadurch gekennzeichnet, daß der Ring (10, 30) aus zwei zusammenfügbaren Halbschalen besteht, daß die Schultern (11-12, 31-32) an je einem Ende des Rings liegen und die Anschlagschulter die vordere Schulter und die Befestigungsschulter die hintere Schulter bildet, und daß die Haltemittel (16, 36) in die vordere Schulter integriert sind, um die beiden Halbschalen auf den freigelegten Leiter unter Klemmwirkung zusammenzufügen.

3. Vorrichtung nach Anspruch 2, dadurch gekennzeichnet, daß die Haltemittel aus Schrauben (16, 36) bestehen, die in Paare von Löchern (15A, 15B) durch die beiden Halbschalen versenkt sind, wobei jedes Paar von Löchern den Ring in Höhe der vorderen Schulter ganz durchquert und diese Schulter den Leiter fest einklemmen.

4. Vorrichtung nach Anspruch 3, bei der die auf dem vorbereiteten Kabelende zu montierende Anschlußeinrichtung ein Kabelendanschluß ist, der auf dem freigelegten Leiter blokkiert ist, dadurch gekennzeichnet, daß die vordere Schulter (31) eine ringförmige, nach innen vorspringende Rippe (37) aufweist, die den Halt des Rings in einer entsprechenden Rinne (26A) an der Peripherie des Endanschlußstücks (26) bewirkt.

5. Vorrichtung nach Anspruch 1, dadurch gekennzeichnet, daß der Ring (40) aus zwei zusammenfügbaren Halbschalen besteht, daß die Befestigungsschulter (42) am hinteren Ende des Rings sitzt, während die Anschlagschulter (41) im mittleren Bereich des Rings angeordnet ist, und daß die Haltemittel (44) durch einen vorderen Bereich des Rings definiert sind, dessen Innendurchmesser im wesentlichen dem Durchmesser des Leiters gleicht und der mit diesem kraftschlüssig verbunden ist.

## Claims

1. An insulation-shrinkage prevention device for preventing insulation from shrinking back on a power cable (1, 2, 20, 50) having synthetic insulation (3, 4, 23, 53) covering a conductor (5, 6, 25, 55) except on a prepared end of said cable, which end is to receive connection equipment, where the bared insulation is set back relative to the conductor which is also bared, said device including an abutment element (11, 31, 41) for abutting against the front face of said insulation, and a fixing element (12, 32, 42) for fixing to the periphery of the end portion of said insulation, said device being characterized in that it is constituted by a shouldered ring (10, 30, 40) having two annular shoulders (11-12, 31-32, 41-42), one of which defines said abutment element, and the other defines said fixing element, said ring being mounted directly in place on said bared conductor and on said end portion of the insulation of said prepared end of said cable, and being secured to said bared conductor by retaining means (16, 36, 44) integrated in said ring.

2. A device according to claim 1, characterized in that said ring (10, 30) comprises two half-shells which can be joined together, and in that said shoulders (11-12, 31-32) are on the ends of said ring, the abutment shoulder being referred to as the "front" shoulder and the fixing shoulder being referred to as the "rear" shoulder, and in that said retaining means (16, 36) are integrated in said front shoulder for the purposes of clamping said half-shells together onto said bared conductor.

3. A device according to claim 2, characterized in that said retaining means are constituted by screws (16, 36) engaged so as not to project outside the ring in pairs of holes (15A, 15B) provided in both of said half-shells, each pair of holes passing through said ring, at said front shoulder which is in turn designed to apply clamping pressure to said conductor.

4. A device according to claim 3, and for which said connection equipment to be mounted on said prepared end of said cable is termination equipment having a connection end-piece locked on said bared conductor, said device being characterized in that said front shoulder (31) has an annular rib (37) projecting inwards in said ring (30), and retaining said ring in a corresponding groove (26A) provided in the periphery of said end-piece (26).

5. A device according to claim 1, characterized in that said ring (40) comprises two half-shells that can be joined together, and in that the fixing shoulder (42) is at the "rear" end of said ring, and the abutment shoulder (41) is in an intermediate position on said ring, and in that said retaining means (44) are defined by a "front" section of said ring, which front section has an inside diameter substantially equal to the diameter of said conductor and is secured thereto.
